# EUROPEAN PATENT APPLICATION

(11) **EP 4 503 422 A1**
(43) Date of publication of application: **05.02.2025**
(21) Application number: 23775164.9
(22) Date of filing: 16.02.2023
(51) Int. Cl.: H02M 3/335

(54) **POWER SUPPLY DEVICE USING DC LINK VOLTAGE OF HIGH-VOLTAGE UNIT OF SEMICONDUCTOR TRANSFORMER**

(30) Priority: 24.03.2022 KR 20220036451
(71) Applicant: LS Electric Co., Ltd., Gyeonggi-do 14119 (KR)
(72) Inventor: HWANG, Kwang Kyu, Anyang-si, Gyeonggi-do 14118 (KR); LEE, Jae Ho, Anyang-si, Gyeonggi-do 14118 (KR); LIM, Jeong Woo, Anyang-si, Gyeonggi-do 14118 (KR)
(74) Representative: K&L Gates LLP
(86) International application number: PCT/KR2023/002265
(87) International publication number: WO 2023/182662

(57) **Abstract**

The present invention provides a power supply device for supplying, using a DC link voltage of a high-voltage unit of a semiconductor transformer, a control power to a transformer control unit for controlling the high-voltage unit, the power supply device comprising: a converter unit which includes a transformer unit and a switch connected in series to a primary side of the transformer unit, is connected to a DC link of the high-voltage unit, and is configured to convert the DC link voltage and output the converted DC link voltage to a transformer control unit; and a converter control unit configured to control on/off of the switch to convert the DC link voltage, wherein the converter unit comprises a first to a (n+1)^{th} converter (wherein, n is an integer greater than or equal to 1) connected in series.

## Description

### [Technical Field]

The present invention relates to a power supply device, and more specifically, to a power supply device that supplies control power to a transformer control unit using a DC link voltage of a high-voltage unit of a solid-state transformer.

### [Background Art]

Power transformers serve to differentiate branches of transmission and power distribution in a power grid system through voltage variable functions. However, since the existing power transformers directly change a low-frequency AC voltage and are large in volume and weight, input/output control is impossible.

In order to address such problems of the existing power transformers, solid-state transformers have been proposed. That is, the solid-state transformers employ a configuration of power conversion devices which is changed to a more efficient way compared to that of the existing power transformer. These solid-state transformers can be applied to various technologies such as new renewable energy, DC distribution, and electric vehicle charging through DC links.

In particular, solid-state transformers can implement various functions such as voltage variable, AC/DC power conversion, power factor, and harmonic control, and since high-frequency transformers are employed, the volume and weight can be significantly reduced compared to those of the existing power transformers. In addition, since the solid-state transformers can be directly connected to high-voltage input voltages, the number of operations of a conversion process can be reduced to increase efficiency.

Generally, a control unit which controls a high-voltage unit of a solid-state transformer is driven by receiving control power from a separate power supply device. However, when a separate power supply device is used, a large voltage difference between a high voltage applied to a plurality of switches included in the high-voltage unit and a voltage of the separate power supply device occurs, and thus an insulation distance should be increased, which causes a problem in that a size of the separate power supply is increased.

### [Disclosure]

### [Technical Problem]

In order to solve the above-described problems, the present invention is directed to providing a power supply device that supplies control power to a transformer control unit using a DC link voltage of a high-voltage unit of a solid-state transformer.

In addition, the present invention is directed to providing a power supply device that can reduce an insulation distance and a size of a converter and use commercial switches with relatively low withstanding voltage.

However, problems to be solved by the present invention are not limited to the above-described problems, and other problems that are not described can be clearly understood by those skilled in the art to which the present invention pertains from the description below.

### [Technical Solution]

In order to achieve the above objects, the present invention provides a power supply device using a DC link voltage of a high-voltage unit of a solid-state transformer, which is a device for supplying control power to a transformer control unit that controls the high-voltage unit using the DC link voltage of the high-voltage unit of the solid-state transformer, which includes a converter unit which includes a transformer unit and a switch connected to a primary side of the transformer unit in series, is connected to a DC link of the high-voltage unit, and converts the DC link voltage to output the converted DC link voltage to the transformer control; and a converter control unit configured to control on/off of the switch to convert the DC link voltage, wherein the converter unit includes first to (n+1)^{th} converters (here, n is an integer greater than or equal to 1) connected in series.

Here, the first to (n+1)^{th} converters may be connected to the primary side of the transformer unit in series and connected to a secondary side of the transformer unit in parallel.

In addition, each of the first to (n+1)^{th} converters may include input capacitors each connected to the primary side of one of the transformer units in parallel, and output capacitors each connected to the secondary side of one of the transformer units in parallel.

In addition, the power supply device may further include a balancing circuit configured to balance voltages of the input capacitors included in the first to (n+1)^{th} converters.

In addition, the balancing circuit may output a control signal, which corresponds to a voltage difference between the input capacitors included in the first to (n+1)^{th} converters, to the converter control unit.

In addition, the converter control unit may control an on/off duty ratio of the switch in response to the control signal.

In addition, voltages of the input capacitors included in the first to (n+1)^{th} converters may be balanced by controlling an on/off duty ratios of the switch.

In addition, the n^{th} converter may include an n^{th} transformer unit, an n^{th} switch connected to a primary side of the n^{th} transformer unit in series, and an n^{th} input capacitor connected to the primary side of the n^{th} transformer unit in parallel.

In addition, the (n+1)^{th} converter may include an (n+1)^{th} transformer unit, an (n+1)^{th} switch connected to a primary side of the (n+1)^{th} transformer unit in series, and an (n+1)^{th} input capacitor connected to the primary side of the (n+1)^{th} transformer unit in parallel.

In addition, the converter control unit may include an n^{th} converter control unit configured to control an on/off duty ratio of the n^{th} switch to convert the DC link voltage, and an (n+1)^{th} converter control unit configured to control an on/off duty ratio of the (n+1)^{th} switch to convert the DC link voltage.

In addition, the n^{th} and (n+1)^{th} input capacitors may be connected in series, and the n^{th} and (n+1)^{th} input capacitors connected in series may be connected to the DC link of the high-voltage unit in parallel.

In addition, the power supply device may further include a balancing circuit configured to balance the voltages of the n^{th} and (n+1)^{th} input capacitors.

Here, the balancing circuit may output a control signal, which corresponds to a voltage difference between the n^{th} and (n+1)^{th} input capacitors, to the n^{th} and (n+1)^{th} converter control units.

In addition, the n^{th} and (n+1)^{th} converter control units may control on/off duty ratios of the n^{th} and (n+1)^{th} switches in response to the control signal.

In addition, voltages of the n^{th} and (n+1)^{th} input capacitors may be balanced by controlling on-off duty ratios of the n^{th} and (n+1)^{th} switches.

In addition, when a voltage of the n^{th} input capacitor is lower than a voltage of the (n+1)^{th} input capacitor, the n^{th} converter control unit may decrease an on-off duty ratio of the n^{th} switch, and when the voltage of the n^{th} input capacitor is greater than the voltage of the (n+1)^{th} input capacitor, the n^{th} converter control unit may increase the on-off duty ratio of the n^{th} switch.

In addition, when a voltage of the (n+1)^{th} input capacitor is lower than a voltage of the n^{th} input capacitor, the (n+1)^{th} converter control unit may decrease an on-off duty ratio of the (n+1)^{th} switch, and when the voltage of the (n+1)^{th} input capacitor is greater than the voltage of the n^{th} input capacitor, the (n+1)^{th} converter control unit may increase the on-off duty ratio of the (n+1)^{th} switch.

In addition, the balancing circuit may include a buffer configured to directly output the voltage of the n^{th} input capacitor, an inverting amplifier configured to invert the voltage of the (n+1)^{th} input capacitor and output the converted voltage, and a comparator configured to output a control signal, which corresponds to a difference between an n^{th} voltage output from the buffer and an (n+1)^{th} voltage output from the inverting amplifier, to the n^{th} and (n+1)^{th} converter control units.

### [Advantageous Effects]

According to the present invention, by supplying control power to a transformer control unit using a DC link voltage of a high-voltage unit of a solid-state transformer, simplified control power supply can be made while minimizing a voltage difference between a plurality of switches included in the high-voltage unit and a power supply device so that an insulation distance and a size of the power supply device can be reduced.

In addition, according to the present invention, by connecting a plurality of converters, which are connected in series, to a DC link of the high-voltage unit, an insulation distance and a size of the converter can be reduced, and a commercial switch with a relatively low withstanding voltage can be used.

In addition, according to the present invention, a balancing circuit can prevent voltage imbalance by balancing voltages of input capacitors included in the plurality of converters, and a commercial switch having a relatively low withstanding voltage can be used.

The effects obtained by the present invention are not limited to the above-described effects and other effects which are not described can be clearly understood by those skilled in the art to which the present invention pertains from the following description.

### [Description of Drawings]

FIG. 1 is a block diagram illustrating a solid-state transformer according to an embodiment of the present invention.
FIG. 2 is a circuit diagram illustrating the solid-state transformer module according to the embodiment of the present invention.
FIG. 3 is a block diagram illustrating a power supply device according to an embodiment of the present invention.
FIG. 4 is a circuit diagram illustrating the power supply device according to the embodiment of the present invention.
FIG. 5 is a circuit diagram illustrating a balancing circuit of the power supply device according to the embodiment of the present invention.

### [Modes of the Invention]

The above object and means of the present invention and their effects will become more apparent through the following detailed description in relation to the accompanying drawings, and accordingly, those of ordinary skill in the art to which the present invention pertains can easily implement the technical idea of the present invention. In addition, in the following description of the present invention, when a detailed description of the known related art is determined to obscure the gist of the present invention, the detailed description thereof will be omitted.

Terms used herein are intended to describe embodiments and are not intended to limit the present invention. In the present specification, the singular forms include the plural forms unless the context clearly dictates otherwise. In the present specification, the term "include," "comprise," "provide," or "have" does not exclude the presence or addition of one or more components other than the described components.

In the present specification, terms such as "or" and "at least one" may indicate one among words listed together or indicate a combination of two or more. For example, "A or B" and "at least one of A and B" may include only one of A or B or include both A and B.

In the present specification, the description using "for example" or the like should not be construed as limiting the embodiments of the present invention by the effect of variations such as tolerances, measurement errors, limitations of measurement accuracy, and other commonly known factors, and additionally, the information presented, such as cited characteristics, variables, or values, may not be exactly the same.

In the present specification, when a component is referred to as being "connected" or "coupled" to another component, it may be directly connected or coupled to another component, but it should be understood that sill another component may be present between the component and another component. Conversely, when a component is referred to as being "directly connected" or "directly coupled" to another, it should be understood that still another component may not be present between the component and another component.

In the present specification, when a component is described as being "on" or "in contact with" another component, it should be understood that the component may be in direct contact with or connected to the other component, but there may also be other components present therebetween. On the other hand, when a component is described as being "directly on" or "in direct contact with" another element, it may be understood that no other component is present between the component and the other component. Other expressions that describe relationships between components, such as "between" and "directly between," can also be construed similarly.

In the present specification, the terms "first," "second," and the like may be used to describe various components, but the components should not be limited by these terms. In addition, the terms should not be construed to limit the order of each component and may be used to distinguish one component from another component. For example, a first component may be referred to as a second component, and similarly, a second component may also be referred to as a first component.

Unless defined otherwise, all terms used herein may be used in a sense commonly understood by those skilled in the art to which the present invention pertains. In addition, terms defined in a commonly used dictionary are not to be construed ideally or excessively unless specifically defined explicitly.

Hereinafter, exemplary embodiments of the present invention will be described in detail with reference to the accompanying drawings.

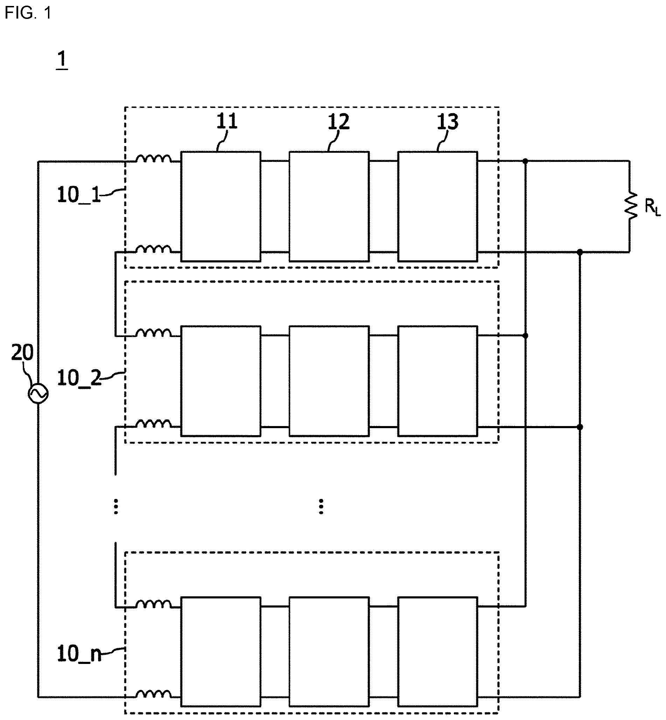

FIG. 1 is a block diagram illustrating a solid-state transformer according to an embodiment of the present invention.

Referring to FIG. 1, a solid-state transformer 1 according to the embodiment of the present invention is a solid state transformer (SST) used for power. For example, the SST 1 used for power may serve to distinguish branches of transmission and power distribution in a power grid system through a voltage variable function. However, the SST 1 may achieve size reduction and high efficiency compared to the heavy and bulky existing power transformer.

In addition, the SST 1 according to the embodiment of the present invention may be applied to a power distribution system. The SST may be classified as a non-modular type, a semi-modular type, or a modular type. That is, the SST 1 may be a modular type in which SST modules 10_1, 10_2, ..., 10_n (here, n is a natural number greater than or equal to 2) are connected in series.

Each transformer module 10 may include a high-voltage unit 11, a transformer unit 12, and a low-voltage unit 13, which are components for converting power of a power supply 20.

The high-voltage unit 11 is a component for processing high-voltage power and converts low-frequency AC power output from the power supply 20 into high-frequency AC. For example, the high-voltage unit 11 may convert the low-frequency AC power into DC and then convert the converted DC into the high-frequency AC.

The transformer unit 12 is a component for power transformation and transforms the high-frequency AC converted from the high-voltage unit 11 into high-frequency low-voltage AC.

The low-voltage unit 13 is a component for processing low-voltage power and converts the high-frequency low-voltage AC transformed in the transformer unit 12 into low-voltage DC. Of course, the transformer unit 12 may further include a component for converting the converted low-voltage DC into the low-voltage AC (i.e., a DC-AC converter). In this case, a high frequency is a frequency higher than the commercial frequency (60 Hz). For example, the low frequency may be 60 Hz and the like, and the high frequency may be 10 kHz and the like, but the present invention is not limited thereto.

The power from the power supply 20 is voltage-divided and supplied to each of the SST modules 10_1, 10_2, ..., and 10_n connected in series. That is, the power of power supply 20 is voltage-divided according to the series connection, and the divided voltage is supplied to each high-voltage unit 11 connected in series.

For example, when n is 10 and power of 10 KV is supplied from the power supply 20, the first to n^{th} high-voltage units are implemented with the same specifications so that the same power is divided. Thus, power of 1 KV may be equally divided and supplied to each of the first to n^{th} high-voltage units.

The low-voltage unit 13 of each of the SST modules 10_1, 10_2, ..., and 10_n is connected to a load R_{L} in parallel.

That is, the SST modules 10_1, 10_2, ..., and 10_n receive power from the power supply 20 in series according to their loads, perform a transformation function for the series-divided power, and transmit the transformed power to the load R_{L}. In addition, a transformer control unit (not shown) for controlling the transformer functions of the high-voltage unit 11 and the low-voltage unit 12 may be included in the SST 1.

Meanwhile, the load R_{L} may be a line such as a distribution line, a DC-AC converter, or various systems which perform specific functions using transformed DC power. For example, the load R_{L} may be a system including an inverter or programmable logic controller (PLC) which controls an operation of an electric motor and may also be a system for various functions related to measurement, communication, input, output, calculation, and the like, but the present invention is not limited thereto.

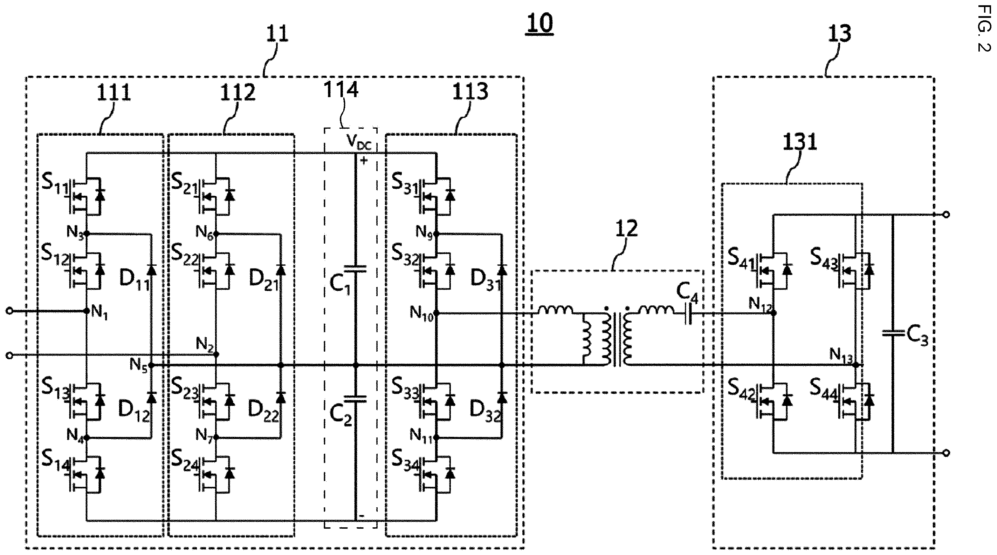

FIG. 2 is a circuit diagram illustrating the SST module according to the embodiment of the present invention.

Hereinafter, a detailed connection and an operation of each component of the circuit diagram of the SST module 10 will be described.

Referring to FIG. 2, the SST module 10 may include the high-voltage unit 11, the transformer unit 12, and the low-voltage unit 13.

In the SST module 10, the high-voltage unit 11 processes input high-voltage power, actively controls the low-frequency AC power output from the power supply 20, converts the low-frequency AC power into DC power, and converts the converted DC power into high-frequency AC power.

The high-voltage unit 11 includes two three-level full bridge legs 111 and 112 connected to each other in series, a three-level half bridge 113, and DC link capacitors C₁ and C₂ provided between the second full bridge leg 112 and the half bridge 113. In this case, the DC link capacitors C₁ and C₂ are connected in series. That is, one end of the first DC link capacitor C₁ and one end of the second DC link capacitor C₂ are connected, and a node N₂ is formed therebetween.

A first output terminal of the second full bridge leg 112 is connected to the other end of the first DC link capacitor C₁ and a first input terminal of the half bridge 113, and a second output terminal of the second full bridge leg 112 is connected to the other end of the second DC link capacitor C₂ and a second input terminal of the half bridge 113.

In addition, the first input terminals of the first and second full bridge legs 111 and 112 to which one of a power line is connected are connected to node N₁, and the second input terminals of the first and second full bridge legs 111 and 112 to which the other of the power line is connected are connected to node N₂.

In addition, one end and the other end of a DC link capacitor C₃ are connected to the first and second output terminals of each of the first and second full bridge legs 111 and 112, respectively.

The first full bridge leg 111 includes four switches S₁₁, S₁₂, S₁₃, and S₁₄ and two diodes D₁₁ and D₁₂. Similarly, the second full bridge leg 112 includes four switches S₂₁, S₂₂, S₂₃, and S₂₄ and two diodes D₂₁ and D₂₂.

The switches S₁₁, S₁₂, S₁₃, S₁₄, S₂₁, S₂₂, S₂₃, and S₂₄ of the first and second full bridge legs 111 and 112) are turned on/off according to a control signal from the transformer control unit (not shown). For example, the switches S₁₁, S₁₂, S₁₃, S₁₄, S₂₁, S₂₂, S₂₃, and S₂₄ may be power semiconductor switches such as insulated gate bipolar transistors (IGBTs), metal oxide semiconductor field effect transistors (MOSFETs), or gate turn-off thyristors (GTOs).

In the first full bridge leg 111, the switches S₁₁, S₁₂, S₁₃, and S₁₄ are connected in series. That is, one end of S₁₁ and one end of S₁₂ are connected to form a node N₃, the other end of S₁₂ and one end of S₁₃ are connected to form a node N₁, and the other end of S₁₃ and one end of S₁₄ are connected to form a node N₄. In this case, the other end of S₁₁ is connected to the other end of C₁, and the other end of S₁₄ is connected to the other end of C₂.

In addition, in the first full bridge leg 111, the diodes D₁₁ and D₁₂ are also connected in series. That is, one end of D₁₁ and one end of D₁₂ are connected to form a node N₅. In this case, the other end of D₁₁ is connected to N₃, and the other end of D₁₂ is connected to N₄.

Similarly, in the second full bridge 112, the switches S₂₁, S₂₂, S₂₃, and S₂₄ are connected in series. That is, one end of S₂₁ and one end of S₂₂ are connected to form a node N₆, the other end of S₂₂ and one end of S₂₃ are connected to form a node N₂, and the other end of S₂₃ and one end of S₂₄ are connected to form a node N₇. In this case, the other end of S₂₁ is connected to one end of C₁, and the other end of S₂₄ is connected to one end of C₄.

In addition, in the second full bridge 112, the diodes D₂₁, and D₂₂ are also connected in series. That is, one end of D₂₁ and one end of D₂₂ are connected to each other and connected to N₅. In this case, the other end of D₂₁ is connected to N₆, and the other end of D₂₂ is connected to N₇.

The first and second full bridge legs 111 and 112 form one full bridge, operate as an analog front end (AFE) converter, actively control the low-frequency AC power output from the power supply 20, and convert the low-frequency AC power into DC power using a switch capable of performing on/off control. The AFE converter has the advantage of controlling voltages of the DC link capacitors C₁ and C₂ (hereinafter referred to as "link voltages"), maintaining a constant DC link voltage, controlling a power factor of an input, and removing a harmonic wave included in an input current.

The first and second full bridge legs 111 and 112 each have three levels. That is, in the first full bridge leg 111, a first level is a state in which S₁₁ and S₁₂ are turned on and S₁₃ and S₁₄ are turned off, a second level is a state in which S₁₁ and S₁₂ are turned off and S₁₃ and S₁₄ are turned on, and a third level is a state in which S₁₁ and S₁₄ are turned on. Similarly, in the second full bridge leg 112, a first level is a state in which S₂₁ and S₂₂ are turned on and S₂₃ and S₂₄ are turned off, a second level is a state in which S₂₁ and S₂₂ are turned off and S₂₃ and S₂₄ are turned on, and a third level is a state in which S₂₁ and S₂₄ are turned on. Thus, a total of five levels may be output by the first and second full bridge legs 111 and 112. That is, when a voltage between one end of C₁ and the other end of C₂ is V_{DC}, a voltage between N₁ and N₂ may exhibit a total of five levels of V_{DC}, V_{DC}/2, 0, -V_{DC}/2, and -V_{DC} according to a complex operation of the first and second full bridge legs 111 and 112, each having three levels.

The half bridge 113 converts the DC converted in the first and second full bridge legs 11 and 112 into a high-frequency AC. In this case, the half bridge 113 includes four switches S₃₁, S₃₂, S₃₃, and S₃₄ and two diodes D₃₁ and D₃₂. The transformer unit 12 includes a primary side and a secondary side. A full bridge 131 includes four switches S₄₁, S₄₂, S₄₃, and S₄₄.

In the half bridge 113, the switches S₃₁, S₃₂, S₃₃, and S₃₄ are connected in series. That is, one end of S₃₁ and one end of S₃₂ are connected to form a node N₉, the other end of S₃₂ and one end of S₃₃ are connected to form a node N₁₀, and the other end of S₃₃ and one end of S₃₄ are connected to form a node N₁₁. In this case, the other end of S₃₁ may be connected to one end of C₁ to serve as a first input terminal of a dual active bridge (DAB) converter, and the other end of S₃₄ may be connected to the other end of C₂ to serve as a second input terminal of the AFE converter.

In addition, in the half bridge 113, the diodes D₃₁, and D₃₂ are also connected in series. That is, one end of D₃₁ and one end of D₃₂ are connected to each other and connected to N₅. In this case, the other end of D₃₁ is connected to N₉, and the other end of D₃₂ is connected to N₁₁.

The half bridge 113 has three levels. That is, in the half bridge 113, a first level is a state in which S₃₁ and S₃₂ are turned on and S₃₃ and S₃₄ are turned off, a second level is a state in which S₃₂ and S₃₃ are turned on and S₃₁ and S₃₄ are turned off, and a third level is a state in which S₃₁ and S₃₂ are off and S₃₃ and S₃₄ are turned on. In this case, in the half bridge 113, V_{DC}/2 at the first level, 0 at the second level, and -V_{DC}/2 at the third level may be applied as a voltage between the first and second output terminals N₁₀ and N₅. For example, according to a control signal of the transformer control unit, a first process of sequentially changing from the first level to the third level and a second process of sequentially changing from the third level to the first level are repeatedly performed so that an operation of converting the DC converted in the first and second full bridge legs 11 and 112 into a high-frequency AC may be performed.

**In** the SST module 10, the transformer unit 12 transforms the high-frequency AC converted by the half bridge 113 into a high-frequency low-voltage AC. In this case, a first output terminal of the half bridge 113 connected to the first input terminal of the transformer unit 12 is N₁₀, and a second output terminal of the half bridge 113 connected to the second input terminal of the transformer unit 12 is N₅.

The primary side and the secondary side of the transformer unit 12 may each include coils with various windings. In this case, the number of coil windings on the primary side may be greater than the number of coil windings on the secondary side. That is, the converted high-frequency AC input to the primary side is transformed into the high-frequency low-voltage AC and output to the secondary side according to the relationship of the numbers of windings between the primary side and the secondary side.

In this case, the first input terminal of the primary side serves as the first input terminal of the transformer unit 12 and is connected to N₁₀ that is the first output terminal of the half bridge 113. The second input terminal of the primary side serves as the second input terminal of the transformer unit 12 and is connected to N₅ that is the second output terminal of the half bridge 113. In addition, active components (such as inductors and the like) or passive components (such as resistors and the like) may be additionally connected to the primary side.

The first output terminal of the secondary side serves as the first output terminal of the transformer unit 12 and is connected to N₁₁ that is the first input terminal of the third full bridge 131. The second output terminal of the secondary side serves as the second output terminal of the transformer unit 12 and is connected to N₁₂ that is the second input terminal of the third full bridge 131. In addition, active components (such as inductors and the like) or passive components (such as resistors and the like) may be additionally connected to the primary side. In particular, a capacitor C₄ for a DC blocking function (i.e., a function of removing a DC component from the transformed low-voltage AC) may be additionally connected to the first or second output terminal of the secondary side.

In the SST module 10, the low-voltage unit 13 converts the high-frequency low-voltage AC converted in the transformer unit 12 into a low-voltage DC. This low-voltage unit 13 includes a two-level third full bridge 131 and a DC link capacitor C₃ connected to the third full bridge 131.

The third full bridge 131 includes four switches S₄₁, S₄₂, S₄₃, and S₄₄. The switches S₄₁, S₄₂, S₄₃, and S₄₄ of the third full bridge 131 are determined to be turned on/off according to a control signal from the transformer control unit (not shown). For example, the switches S₄₁, S₄₂, S₄₃, and S₄₄ may be power semiconductor switches such as IGBTs, MOSFETs, or GTOs.

S₄₁ and S₄₂, which are connected in series, form one full bridge leg, and S₄₃ and S₄₄, which are connected in series, form another full bridge leg. That is, one end of S₄₁ and one end of S₄₂ are connected to form a node N₁₁, and one end of S₄₃ and one end of S44 are connected to form a node N₁₂. In this case, the other end of S₄₁ and the other end of S₄₃ may be connected to one end of C₃ to serve as a first output terminal of the third full bridge 131, and the other end of S₄₂ and the other end of S₄₄ may be connected to the other end of C₃ to serve as a second output terminal of the third full bridge 131. In addition, one end of R_{L} may serve as the first output terminal of the SST module 10 and be connected to a first terminal of the load R_{L}, and the other end of R_{L} may serve as the second output terminal of the SST module 10 and be connected to a second terminal of the load R_{L}.

The third full bridge 131 has two levels. That is, in the third full bridge 131, a first level is a state in which S₄₁ and S₄₄ are turned on and S₄₂ and S₄₃ are turned off, and a second level is a state in which S₄₁ and S₄₄ are turned off and S₄₂ and S₄₃ are turned on. Since the first-level and second-level processes are repeatedly performed, a third operation of converting the high-frequency low-voltage AC converted in the transformer unit 12 into a DC may be performed, and the DC applied to C₃ according to the third operation may be transmitted to the load R_{L}.

Meanwhile, the half bridge 113, the transformer unit 12, and the third full bridge 131 operate as one DC-DC converter. That is, a first operation of converting the DC converted in the first and second full bridge legs 111 and 112 into the high-frequency AC, a second operation of transforming the converted high-frequency AC into the high-frequency low-voltage AC, and a third operation of converting the converted high-frequency low-voltage AC into the low-voltage DC may be performed. The DC-DC converter may correspond to a DAB converter, which is one of isolated bidirectional DC-DC converters, and unlike a bidirectional resonant converter such as a CLLC converter, the DC-DC converter has the advantage of smooth direction switching of a load current and easy power direction control by a phase shift.

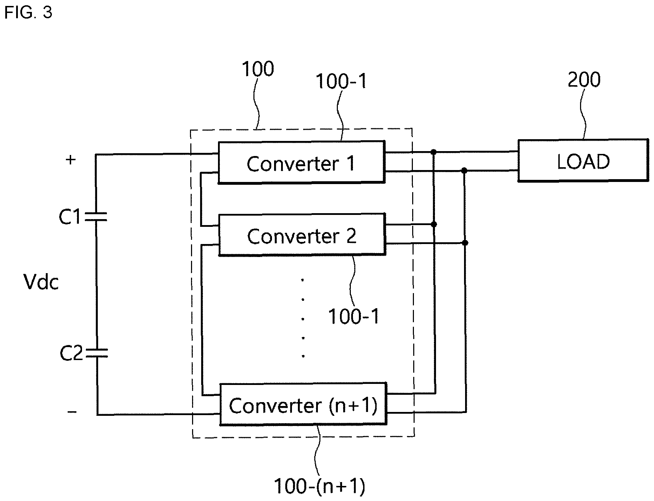

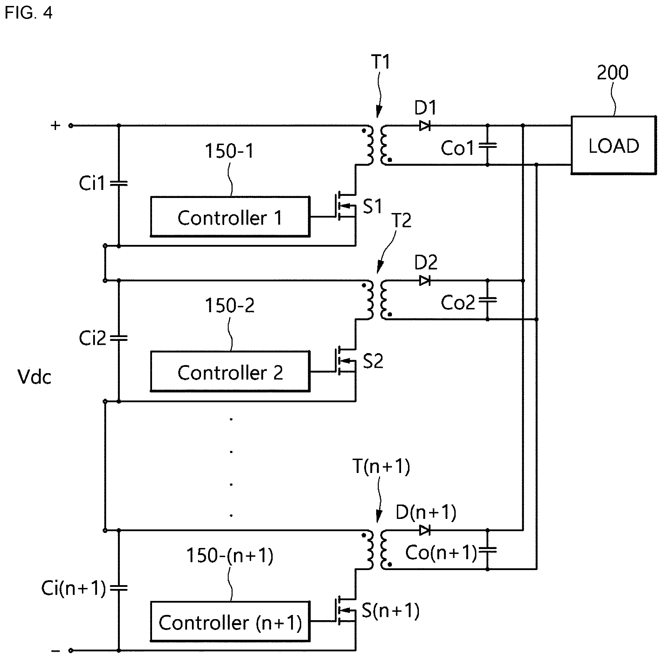

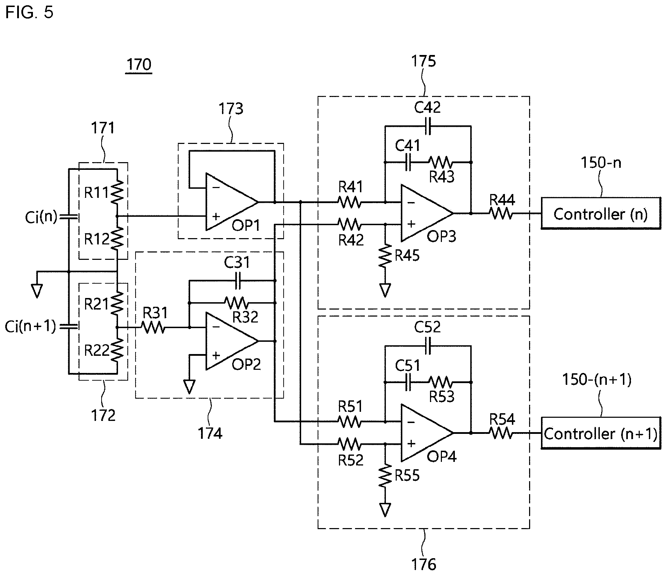

FIG. 3 is a block diagram illustrating a power supply device according to an embodiment of the present invention, and FIG. 4 is a circuit diagram illustrating the power supply device according to the embodiment of the present invention. In addition, FIG. 5 is a circuit diagram illustrating a balancing circuit of the power supply device according to the embodiment of the present invention.

Hereinafter, the power supply device according to the embodiment of the present invention will be described in detail with reference to FIGS. 3 to 5.

The power supply device according to the embodiment of the present invention is a device that supplies control power to a transformer control unit 200 which controls a high-voltage unit 11 using a DC link voltage V_{DC} of the high-voltage unit 11 of a SST 1. Here, the transformer control unit 200 is a component for controlling switching operations of a plurality of switches (S₁₁, S₁₂, S₁₃, S₁₄), (S₂₁, S₂₂, S₂₃, S₂₄), and (S₃₁, S₃₂, S₃₃, S₃₄) included in the high-voltage unit 11 of the SST 1.

Typically, the transformer control unit 200 is driven by receiving control power from a separate power supply device. However, when a separate power supply device is used, a large voltage difference occurs between a high voltage applied to the plurality of switches (S₁₁, S₁₂, S₁₃, S₁₄), (S₂₁, S₂₂, S₂₃, S₂₄), and (S₃₁, S₃₂, S₃₃, S₃₄) included in the high-voltage unit 11 and the voltage of the separate power supply device, and thus an insulation distance should be increased, which causes a problem of increasing a size of the separate power supply device.

However, since the power supply device according to the embodiment of the present invention supplies control power to the transformer control unit 200 using the DC link voltage V_{DC} of the high-voltage unit 11 of the SST 1, the control power can be generated simply and the voltage difference between the plurality of switches (S₁₁, S₁₂, S₁₃, S₁₄), (S₂₁, S₂₂, S₂₃, S₂₄), and (S₃₁, S₃₂, S₃₃, S₃₄) included in the high-voltage unit 11 and the power supply device can be minimized, thereby reducing the insulation distance and the size of the power supply device.

The power supply device according to the embodiment of the present invention may include a converter unit 100 and a converter control unit 150.

The converter unit 100 includes a plurality of converters 100_1 to 100_(n+1) (here, n is an integer greater than or equal to 1). Here, the plurality of converters 100_1 to 100_(n+1) may be flyback converters.

The plurality of converters 100_1 to 100_(n+1) include transformer units T₁ to T₍ₙ₊₁₎ (here, n is an integer greater than or equal to 1), switches S₁ to S₍ₙ₊₁₎ (here, n is an integer greater than or equal to 1) connected in series to primary sides of the transformer units T₁ to T₍ₙ₊₁₎, and input capacitors Cᵢ₁ to Cᵢ₍ₙ₊₁₎ (here, n is an integer greater than or equal to 1) connected in parallel to the primary sides of the transformer units T₁ to T₍ₙ₊₁₎.

Here, the transformer units T₁ to T₍ₙ₊₁₎ include primary coils and secondary coils, and the switches S₁ to S₍ₙ₊₁₎ may be power semiconductor switches such as IGBTs, MOSFETs, or GTOs.

In addition, the plurality of converters 100_1 to 100_(n+1) include diodes D₁ to D₍ₙ₊₁₎ connected in series to secondary sides of the transformer units T₁ to T₍ₙ₊₁₎ and output capacitors Cₒ₁ to Cₒ₍ₙ₊₁₎ (here, n is an integer greater than or equal to 1) connected in parallel to the secondary sides of the transformer units T₁ to T₍ₙ₊₁₎.

The converter unit 100 may be connected in parallel to a DC link 114 of the high-voltage unit 11 and may convert the DC link voltage V_{DC} to output the converted DC link voltage V_{DC} to the transformer control unit 200.

The converter control unit 150 may control on/off duty ratios of the switches S₁ to S₍ₙ₊₁₎ of the converter unit 150 in order to convert the DC link voltage V_{DC} and generate control power.

Hereinafter, a converting operation the first converter 100_1 will be described as an example.

A DC voltage input to the converter 100_1 is supplied to the primary side of the transformer unit T₁ by a switching operation of the switch S₁. In this case, the converter control unit 150_1 receives feedback on an output voltage of the secondary side of the transformer unit T₁ and controls the switching operation of the switch S₁ to convert the DC voltage into an AC voltage. In addition, the converted AC voltage is input to the primary side of the transformer unit T₁, and an AC voltage proportional to a turns ratio of the transformer unit T₁ is induced on the secondary side of the transformer unit T₁. Then, the induced AC voltage is converted into a DC voltage by the diode D₁ and the output capacitor Cₒ₁.

Meanwhile, when the DC link voltage V_{DC} of the high-voltage unit 11 of the SST 1 is supplied, as the control power, to the transformer control unit 200 through one converter, since a high voltage is applied to one converter, not only does the size of the converter increase to secure an insulation distance, but also a plurality of switches should be connected in series to be used. In this case, there is a problem in that switches with high withstanding voltages should be used due to an imbalance in the voltages applied to the plurality of switches.

In order to address such a problem, the converter unit 100 of the present invention includes the first to (n+1)^{th} converters 100_1 to 100_(n+1), and the first to (n+1)^{th} converters 100_1 to 100_(n+1) are connected in series.

Accordingly, in the converter unit 100 of the present invention, since the DC link voltage V_{DC} is divided among the first to (n+1)^{th} converters 100_1 to 100_(n+1) according to the law of voltage division and input thereto, the insulation distance and the size of the converter can be reduced, and a commercial switch having a relatively low withstanding voltage can be used.

Specifically, the first to (n+1)^{th} converters 100_1 to 100_(n+1) are connected in series to the primary sides of the transformer units T₁ to T₍ₙ₊₁₎ and connected in parallel to the secondary sides of the transformer units T₁ to T₍ₙ₊₁₎.

Here, the DC link voltage V_{DC} may be divided and input to the input capacitors Cᵢ₁ to Cᵢ₍ₙ₊₁₎ of the first to (n+1)^{th} converters 100_1 to 100_(n+1).

Meanwhile, an imbalance may occur in the voltages input to the input capacitors Cᵢ₁ to Cᵢ₍ₙ₊₁₎ of the first to (n+1)^{th} converters 100_1 to 100_(n+1). Due to the voltage imbalance, for example, a relatively high voltage may be input to the first input capacitor Cᵢ₁ of the first converter 100_1, and in this case, a voltage that is greater than a withstanding voltage of the first switch S₁ included in the first converter 100_1 may be applied, which may cause the first switch S₁ to be burnt.

In order to address such a problem, the power supply device of the present invention includes a balancing circuit 170.

The balancing circuit 170 may balance the voltages of the input capacitors Cᵢ₁ to Cᵢ₍ₙ₊₁₎ included in the first to (n+1)^{th} converters 100_1 to 100_(n+1).

Specifically, the balancing circuit may output control signals, which correspond to voltage differences between the input capacitors Cᵢ₁ to Cᵢ₍ₙ₊₁₎ included in the first to (n+1)^{th} converters 100_1 to 100_(n+1), to the converter control units 150_1 to 150_(n+1). In addition, in response to the input control signal, the converter control units 150_1 to 150_(n+1) may control the on/off duty ratios of the switches S₁ to S₍ₙ₊₁₎.

Here, the voltages of the input capacitors Cᵢ₁ to Cᵢ₍ₙ₊₁₎ included in the first to (n+1)^{th} converters 100_1 to 100_(n+1) may be balanced by controlling the on/off duty ratios of the switches S₁ to S₍ₙ₊₁₎.

Hereinafter, an operation of the balancing circuit according to an embodiment of the present invention will be described in detail with reference to FIG. 5.

The balancing circuit 170 may balance the voltages of the n^{th} input capacitor Cᵢₙ and the (n+1)^{th} input capacitor Cᵢ₍ₙ₊₁₎.

Specifically, the balancing circuit 170 outputs control signals corresponding to a voltage difference between the n^{th} input capacitor Cᵢₙ and the (n+1)^{th} input capacitor Cᵢ₍ₙ₊₁₎ to the n^{th} converter control unit 150_n and the (n+1)^{th} converter control unit 150_(n+1). **In** addition, in response to the input control signals, the n^{th} and (n+1)^{th} converter control units control on/off duty ratios of the n^{th} switch Sₙ and the (n+1)^{th} switch S₍ₙ₊₁₎. Accordingly, voltages of the n^{th} input capacitor Cᵢₙ and the (n+1)^{th} input capacitor Cᵢ₍ₙ₊₁₎ are balanced by control of the on/off duty ratios of the n^{th} switch Sₙ and the (n+1)^{th} switch S₍ₙ₊₁₎.

More specifically, when the voltage of the n^{th} input capacitor Cᵢₙ is lower than the voltage of the (n+1)^{th} input capacitor Cᵢ₍ₙ₊₁₎, the n^{th} converter control unit 150_n may decrease the on/off duty ratio of the n^{th} switch Sₙ. Accordingly, the voltage of the n^{th} input capacitor Cᵢₙ may be increased by transmitting less power stored in the n^{th} input capacitor Cᵢₙ to the secondary side of the transformer unit Tₙ.

**In** addition, when the voltage of the n^{th} input capacitor Cᵢₙ is greater than the voltage of the (n+1)^{th} input capacitor Cᵢ₍ₙ₊₁₎, the n^{th} converter control unit 150_n may increase the on/off duty ratio of the n^{th} switch Sₙ. Accordingly, the voltage of the n^{th} input capacitor Cᵢₙ may be decreased by transmitting more of the power stored in the n^{th} input capacitor Cᵢₙ to the secondary side of the transformer unit Tₙ.

**In** addition, when the voltage of the (n+1)^{th} input capacitor Cᵢ₍ₙ₊₁₎ is lower than the voltage of the n^{th} input capacitor Cᵢₙ, the (n+1)^{th} converter control unit 150_(n+1) may decrease the on/off duty ratio of the (n+1)^{th} switch S₍ₙ₊₁₎. Accordingly, the voltage of the (n+1)^{th} input capacitor Cᵢ₍ₙ₊₁₎ may be increased by transferring less power stored in the (n+1)^{th} input capacitor Cᵢ₍ₙ₊₁₎ to the secondary side of the transformer unit T₍ₙ₊₁₎.

In addition, when the voltage of the (n+1)^{th} input capacitor Cᵢ₍ₙ₊₁₎ is greater than the voltage of the n^{th} input capacitor Cᵢₙ, the on/off duty ratio of the (n+1)^{th} switch S₍ₙ₊₁₎ may be increased. Accordingly, the voltage of the (n+1)^{th} input capacitor Cᵢ₍ₙ₊₁₎ may be decreased by transmitting more of the power stored in the (n+1)^{th} input capacitor Cᵢ₍ₙ₊₁₎ to the secondary side of the transformer unit T₍ₙ₊₁₎.

The balancing circuit 170 may include a first voltage divider unit 171, a second voltage divider unit 172, a buffer 173, an inverting amplifier 174, a first comparator 175, and a second comparator 176.

The first voltage divider unit 171 includes two resistors R₁₁ and R₁₂ and divides a voltage of the n^{th} input capacitor Cᵢₙ. Here, R₁₁ and R₁₂ are connected in series, and the R₁₁ and R₁₂ connected in series are connected to the n^{th} input capacitor Cᵢₙ in parallel.

The second voltage divider unit 172 includes two resistors R₂₁ and R₂₂ and divides a voltage of the (n+1)^{th} input capacitor Cᵢ₍ₙ₊₁₎. Here, R₂₁ and R₂₂ are connected in series, and the R₂₁ and R₂₂ connected in series are connected to the (n+1)^{th} input capacitor Cᵢ₍ₙ₊₁₎ in parallel.

The buffer 173 includes an operational amplifier (op-amp) OP₁ and directly outputs the voltage of the n^{th} input capacitor Cᵢₙ. Here, a non-inverting terminal (+) of the op-amp OP₁ is connected between the two resistors R₁₁ and R₁₂ of the first voltage divider unit 171, and an inverting terminal (-) of the op-amp OP₁ is connected to an output terminal of the op-amp OP₁. Accordingly, the voltage of the capacitor Cᵢₙ is divided by the two resistors R₂₁ and R₂₂, and the divided voltage is directly output to the output terminal of the op-amp OP₁.

The inverting amplifier 174 includes an op-amp OP₂, two resistors R₃₁ and R₃₂, and one capacitor C₃₁ and inverts the voltage of the (n+1)^{th} input capacitor Cᵢ₍ₙ₊₁₎ and outputs the inverted voltage. Here, R₃₁ is connected between a node between the two resistors R₂₁ and R₂₂ of the second voltage divider unit 172 and an inverting terminal () of the op-amp OP₂. In addition, R₃₂ and C₃₁ are connected in parallel to the inverting terminal (-) of the op-amp OP₂ and an output terminal of the op-amp OP₂. In addition, a non-inverting terminal (+) of the op-amp OP₂ is connected to a ground.

The first comparator 175 includes an op-amp OP₃, five resistors R₄₁, R₄₂, R₄₃, R₄₄, and R₄₅, and two capacitors C₄₁ and C₄₂ and outputs a control signal, which corresponds to a difference between an n^{th} voltage output from the buffer 173 and an (n+1)^{th} voltage output from the inverting amplifier 174, to the n^{th} converter control unit 150_n. Here, R₄₁ is connected between the output terminal of the buffer 173 and an inverting terminal (-) of the op-amp OP₃. In addition, R₄₂ is connected between an output terminal of the inverting amplifier 174 and a non-inverting terminal (+) of the op-amp OP₃. In addition, R₄₅ is connected between the non-inverting terminal (+) of the op-amp OP₃ and the ground. In addition, R₄₃ and C₄₁ are connected in series, and the R₄₃ and C₄₁ and C₄₂ connected in series are connected to the inverting terminal (-) of the op-amp OP₃ and an output terminal of the op-amp OP₃ in parallel. In addition, R₄₄ is connected between the output terminal of the op-amp OP₃ and the n^{th} converter control unit 150_n.

The second comparator 176 includes an op-amp OP₄, five resistors R₅₁, R₅₂, R₅₃, R₅₄, and R₅₅, and two capacitors C₅₁ and C₅₂ and outputs a control signal, which corresponds to a difference between the n^{th} voltage output from the buffer 173 and an (n+1)^{th} voltage output from the inverting amplifier 174, to the (n+1)^{th} converter control unit 150_(n+1). Here, R₅₂ is connected between the output terminal of the buffer 173 and a non-inverting terminal (+) of the op-amp OP₄. In addition, R₅₁ is connected between the output terminal of the inverting amplifier 174 and an inverting terminal (-) of the op-amp OP₄. In addition, R₅₅ is connected between the non-inverting terminal (+) of the op-amp OP₄ and the ground. In addition, R₅₃ and C₅₁ are connected in series, and the R₅₃ and C₅₁ and C₅₂ connected in series are connected to the inverting terminal (-) of the op-amp OP₄ and an output terminal of the op-amp OP₄ in parallel. In addition, R₅₄ is connected between the output terminal of the op-amp OP₄ and the (n+1)^{th} converter control unit 150_(n+1).

According to the above-described power supply device according to the embodiment of the present invention, the balancing circuit 170 can prevent a voltage imbalance by balancing the voltages of the n^{th} input capacitor Cᵢₙ and the (n+1)^{th} input capacitor Cᵢ₍ₙ₊₁₎ so that a commercial switch with a relatively low withstanding voltage can be used.

Although specific embodiments have been described in the detailed description of the present invention, it should be understood that various modifications may be made without departing from the scope of the present invention. Therefore, the scope of the present invention is not limited to the described embodiments, but should be determined by the appended claims and equivalents thereof.

### [Industrial Applicability]

A power supply device using a DC link voltage of a high-voltage unit of a solid-state transformer according to the present invention can be used in various fields such as power transformers.

## Claims

1. A power supply device using a DC link voltage of a high-voltage unit of a solid-state transformer, which is a device for supplying control power to a transformer control unit that controls the high-voltage unit using the DC link voltage of the high-voltage unit of the solid-state transformer, the power supply device comprising:
a converter unit which includes a transformer unit and a switch connected to a primary side of the transformer unit in series, is connected to a DC link of the high-voltage unit, and converts the DC link voltage to output the converted DC link voltage to the transformer control unit; and
a converter control unit configured to control on/off of the switch to convert the DC link voltage,
wherein the converter unit includes first to (n+1)^{th} converters (here, n is an integer greater than or equal to 1) connected in series.

2. The power supply device of claim 1, wherein the first to (n+1)^{th} converters are connected to the primary side of the transformer unit in series and connected to a secondary side of the transformer unit in parallel.

3. The power supply device of claim 1, wherein each of the first to (n+1)^{th} converters includes:
input capacitors each connected to the primary side of one of the transformer units in parallel; and
output capacitors each connected to the secondary side of one of the transformer unit in parallel.

4. The power supply device of claim 3, further comprising a balancing circuit configured to balance voltages of the input capacitors included in the first to (n+1)^{th} converters.

5. The power supply device of claim 4, wherein the balancing circuit outputs a control signal, which corresponds to a voltage difference between the input capacitors included in the first to (n+1)^{th} converters, to the converter control unit.

6. The power supply device of claim 5, wherein the converter control unit controls an on/off duty ratio of the switch in response to the control signal.

7. The power supply device of claim 3, wherein voltages of the input capacitors included in the first to (n+1)^{th} converters are balanced by controlling an on/off duty ratio of the switch.

8. The power supply device of claim 1, wherein:
the n^{th} converter includes an n^{th} transformer unit, an n^{th} switch connected to a primary side of the n^{th} transformer unit in series, and an n^{th} input capacitor connected to the primary side of the n^{th} transformer unit in parallel; and
the (n+1)^{th} converter includes an (n+1)^{th} transformer unit, an (n+1)^{th} switch connected to a primary side of the (n+1)^{th} transformer unit in series, and an (n+1)^{th} input capacitor connected to the primary side of the (n+1)^{th} transformer unit in parallel.

9. The power supply device of claim 8, wherein the converter control unit includes:
an n^{th} converter control unit configured to control an on/off duty ratio of the n^{th} switch to convert the DC link voltage; and
an (n+1)^{th} converter control unit configured to control an on/off duty ratio of the (n+1)^{th} switch to convert the DC link voltage.

10. The power supply device of claim 9, wherein the n^{th} and (n+1)^{th} input capacitors are connected in series, and the n^{th} and (n+1)^{th} input capacitors connected in series are connected to the DC link of the high-voltage unit in parallel.

11. The power supply device of claim 10, further comprising a balancing circuit configured to balance voltages of the n^{th} and (n+1)^{th} input capacitors.

12. The power supply device of claim 11, wherein the balancing circuit outputs a control signal, which corresponds to a voltage difference between the n^{th} and (n+1)^{th} input capacitors, to the n^{th} and (n+1)^{th} converter control units.

13. The power supply device of claim 12, wherein the n^{th} and (n+1)^{th} converter control units control on/off duty ratios of the n^{th} and (n+1)^{th} switches in response to the control signal.

14. The power supply device of claim 8, wherein voltages of the n^{th} and (n+1)^{th} input capacitors are balanced by controlling on-off duty ratios of the n^{th} and (n+1)^{th} switches.

15. The power supply device of claim 9, wherein, when a voltage of the n^{th} input capacitor is lower than a voltage of the (n+1)^{th} input capacitor, the n^{th} converter control unit decreases an on-off duty ratio of the n^{th} switch, and
when the voltage of the n^{th} input capacitor is greater than the voltage of the (n+1)^{th} input capacitor, the n^{th} converter control unit increases the on-off duty ratio of the n^{th} switch.

16. The power supply device of claim 9, wherein, when a voltage of the (n+1)^{th} input capacitor is lower than a voltage of the n^{th} input capacitor, the (n+1)^{th} converter control unit decreases an on-off duty ratio of the (n+1)^{th} switch, and
when the voltage of the (n+1)^{th} input capacitor is greater than the voltage of the n^{th} input capacitor, the (n+1)^{th} converter control unit increases the on-off duty ratio of the (n+1)^{th} switch.

17. The power supply device of claim 11, wherein the balancing circuit includes:
a buffer configured to directly output the voltage of the n^{th} input capacitor;
an inverting amplifier configured to invert the voltage of the (n+1)^{th} input capacitor and output the converted voltage; and
a comparator configured to output a control signal, which corresponds to a difference between an n^{th} voltage output from the buffer and an (n+1)^{th} voltage output from the inverting amplifier, to the n^{th} and (n+1)^{th} converter control units.
